# EUROPÄISCHE PATENTSCHRIFT

(11) **EP 2 956 274 B1**
(45) Veröffentlichungstag und Bekanntmachung des Hinweises auf die Patenterteilung: **05.09.2018**
(21) Anmeldenummer: 14705997.6
(22) Anmeldetag: 11.02.2014
(51) Int. Cl.: F16B 2/18, B25B 5/06

(54) **LÖSBARE BLOCKIERVORRICHTUNG INSBESONDERE AN EINEM SPANNWERKZEUG**
DETACHABLE BLOCKING DEVICE, IN PARTICULAR ON A CLAMPING TOOL
DISPOSITIF DE BLOCAGE DESSERRABLE, EN PARTICULIER SUR UN OUTIL DE SERRAGE

(30) Priorität: 14.02.2013 DE 102013101479
(43) Veröffentlichungstag der Anmeldung: 23.12.2015
(73) Patentinhaber: Wolfcraft GmbH, 56746 Kempenich (DE)
(72) Erfinder: NONIEWICZ, Zbigniew, 56746 Kempenich (DE); SCHÜLLER, Hans-Jürgen, 53426 Königsfeld (DE)
(74) Vertreter: Grundmann, Dirk
(86) Internationale Anmeldenummer: PCT/EP2014/052655
(87) Internationale Veröffentlichungsnummer: WO 2014/124941

(56) Entgegenhaltungen:
- EP-B1- 0 997 232
- WO-A2-2012/068033
- DE-U1-202011 003 465

## Beschreibung

Die Erfindung betrifft eine lösbare Blockiervorrichtung insbesondere an einem Spannwerkzeug bspw. an einer Spannzwinge mit einem Blockierelement das in einer Blockierstellung die Verlagerbarkeit einer Stange zumindest in einer Löserichtung blockiert, und einem Löseglied, das bei seiner Verlagerung von einer Grundstellung in eine Lösestellung das Blockierelement in eine Freigabestellung verlagert, in der die Stange zumindest in Löserichtung verlagerbar ist.

Die Erfindung betrifft darüber hinaus auch eine Spannzwinge mit einer eine erste Spannbacke tragenden Stange und einem eine zweite Spannbacke tragenden Gehäuse, welches ein Antriebsglied aufweist, durch dessen mehrmalig hintereinander erfolgenden Betätigung die Stange schrittweise in einer Löserichtung entgegengerichteten Spannrichtung verlagerbar ist.

Eine derartige Spannzwinge beschreibt die EP 0 997 232 B1. Innerhalb des Gehäuses befindet sich dort ein Blockierelement, das in einer Blockierstellung die Verlagerbarkeit der Stange in Löserichtung blockiert. Mit dem Antriebsglied können die beiden Spannbacken in eine Spannstellung gebracht werden. Dabei können die beiden Spannbacken aufeinander zu oder voneinander weg bewegt werden. Letzterenfalls arbeitet die Spannzwinge als Spreizzwinge. Es ist ein Löseglied vorgesehen, das bei seiner Verlagerung von einer Grundstellung das Blockierglied in eine Freigabestellung verlagert, in der die Stange sowohl in Löserichtung als auch in der dieser entgegengerichteten Spannrichtung verlagerbar ist. Das Blockierelement wird dort von einer Stahlplatte gebildet, die ein Fenster besitzt, durch das die Stange geführt ist. Die Fensterkanten graben sich in der Blockierstellung in Oberflächenabschnitte der Stange ein. Wird das Löseglied betätigt, so wird das Blockierelement aus der verkanteten Stellung gebracht, sodass sich die Stange durch das Fenster verlagern kann. Das Löseglied wirkt dort mit dem Blockierelement derart zusammen, dass vermittels eines mehrmalig hintereinander erfolgenden Verlagerns des Lösegliedes über die Lösestellung hinaus die Stange schrittweise in Löserichtung verlagerbar ist. Das Blockierelement wird dabei vom Löseglied in Spannrichtung über die Schiene geschoben, wobei eine Rückverlagerungsfeder gespannt wird. Die Rückverlagerungsfeder ist in der Lage, das Blockierelement in eine Verkantungsstellung zu bringen, um das Blockierelement zusammen mit der daran gefestigten Stange zu verlagern.

Der Erfindung liegt die Aufgabe zugrunde, eine lösbare Blockiervorrichtung bzw. ein damit ausgestattetes Spannwerkzeug gebrauchsvorteilhaft weiterzubilden.

Gelöst wird die Aufgabe durch die in den Ansprüchen angegebene Erfindung.

Zunächst und im Wesentlichen wird ein Bremselement vorgeschlagen. Das Blockierelement entfaltet zumindest in seiner Blockierstellung eine bewegungshemmende Wirkung bezogen auf die Stange in Löserichtung. Wird das Blockierelement von der Grundstellung in die Lösestellung gebracht, so hängt es von der jeweiligen Bauform der Blockiervorrichtung bzw. des Spannwerkzeuges ab, ob die Stange frei, also ohne nennenswerte Reibung, gegenüber dem Blockierelement verlagerbar ist. Mit dem erfindungsgemäß vorgeschlagenen Bremselement ist eine Verlagerung der Stange in der Lösestellung nur nach Überwindung einer Bremskraft möglich. Erfindungsgemäß kann das Bremselement von seiner Bremsstellung in eine Gleitstellung gebracht werden. Dies kann durch eine körperliche Verlagerung des Bremselementes erfolgen. In der Gleitstellung muss die zusätzliche Bremskraft nicht überwunden werden. In der Gleitstellung des Bremselementes ist die Bremskraft nicht wirksam. Die Bremskraft ist hier aufgehoben. Es kann vorgesehen sein, dass sich in der Gleitstellung die Stange allein durch Beaufschlagung durch die Schwerkraft verlagern lässt. Die Bremskraft ist jedoch bevorzugt so groß, dass sich die Stange in der Bremsstellung nicht alleine durch die Schwerkraft verlagern lässt. In einer Weiterbildung der Erfindung ist vorgesehen, dass das Bremselement durch eine über die Lösestellung hinausgehende Verlagerung des Lösegliedes von der Bremsstellung in die Gleitstellung bringen lässt. Das Bremselement kann eine Bremsflanke aufweisen, die in der Bremsstellung kraftbeaufschlagt an einem Oberflächenabschnitt der Stange anliegt. Die Stange wird dann bevorzugt durch Haftreibung in der Bremsstellung gehalten. Die Bremskraft ist dann eine Reibkraft, die von der bevorzugt federbeaufschlagten Bremsflanke auf den Oberflächenabschnitt der Stange ausgeübt wird. Die Verlagerung des Bremselementes von der Bremsstellung in die Gleitstellung bewirkt dann, dass sich die Bremsflanke von der Stange löst, die Reibkraft ist dann aufgehoben. Bei der Stange kann es sich um eine flache Stahlstange handeln, die bezogen auf die Wirkung von Spannbacken eine Zugstange oder eine Druckstange ausbilden kann. Das Bremselement kann ein Bremshebel sein. Der Bremshebel kann einarmig sein. Bevorzugt ist der Bremshebel um einen Lagerzapfen schwenkbar an einem Gehäuse gelagert, welches auch das Löseglied und das Blockierglied aufnimmt. Der Bremshebel kann Achsfortsätze besitzen, die in entsprechenden Lageröffnungen der Gehäusewandung eingreifen.. Auch das Löseglied kann um einen Lagerzapfen schwenkbar dem Gehäuse zugeordnet sein. Das Löseglied kann eine zweiarmigen Hebel ausbilden. Ein Hebelarm ragt als Betätigungsabschnitt aus dem Gehäuse heraus. Ein anderer Hebelarm kann das Bremselement beaufschlagen, wenn der Lösehebel verschwenkt wird. Bevorzugt wird das Bremselement erst dann vom Lösehebel beaufschlagt, wenn der Lösehebel das Blockierelement eine gewisse Strecke entlang der Schiene verlagert hat, wobei während dieser Verlagerung des Blockierelementes über die Schiene die Position der Schiene durch das Bremselement festgehalten wird. Die Beaufschlagung des Bremselementes erfolgt vorzugsweise unter Vermittlung des Blockierelementes. Dabei wird das Blockierelement vom Lösehebel beaufschlagt und beaufschlagt wiederum das Bremselement. Das Bremselement kann ein Fenster aufweisen, durch das die Stange geführt ist. Ein Laibungsabschnitt des Fensters, es kann sich dabei um eine Schmalseite des Fensters handeln, beaufschlagt in der Bremsstellung einen Abschnitt der Stange, wobei es sich bevorzugt um einen Schmalseitenabschnitt handelt. Das Bremselement wird vorzugsweise von einer Feder, insbesondere einer Druckfeder in der Bremsstellung gehalten. Liegt das Bremselement mit seiner Bremsflanke reibschlüssig an der Oberfläche der Stange an, so wird die Reibkraft von der Feder erzeugt. Bevorzugt erstreckt sich die Feder in Verlagerungsrichtung der Stange. Ihre Wirkrichtung ist ihre Erstreckungsrichtung. Das Blockierelement kann erfindungsgemäß von einer Stahlplatte mit einem Fenster gebildet sein. Durch das Fenster ist die Stange geführt. Das Fenster bildet Kanten aus, die in einer Blockierstellung als Folge einer Verkantung der Stahlplatte mit der Stange bei Ausüben einer Kraft in Längsrichtung auf die Stange mit einem Oberflächenabschnitt der Stange zusammenwirkt. Die Kanten können sich dabei in den Oberflächenabschnitten der Stange eingraben. Mit ähnlichen Mitteln lässt sich die Stange auch in Spannrichtung verlagern. Hierzu besitzt eine Spannzwinge einen Antriebshebel, der verschwenkbar ist. Ein in das Gehäuse hineinragender Arm des Antriebshebels beaufschlagt dabei ein Antriebselement. Das Antriebselement kann ebenfalls von einer Stahlplatte mit einem Fenster ausgebildet sein, durch welches die Stange geführt ist. Wird der Antriebshebel verschwenkt, so verkanten sich die Antriebselemente an der Stange. Sie werden beim Verschwenken des Antriebshebels relativ gegenüber dem Gehäuse verlagert und nehmen die Stange in Spannrichtung mit. Das Blockierelement wird dabei von einer Rückverlagerungsfeder in der Blockierstellung gehalten. Hierdurch kann die Spannzwinge in eine Spannstellung gebracht werden. Um die Spannzwinge aus der Spannstellung, die auch eine Spreizstellung sein kann, zu bringen, ist das Löseglied, also bevorzugt der Lösehebel zu betätigen. Das Blockierelement wird dadurch in seine Lösestellung gebracht. Es kann durch Weiterverschwenken des Lösegliedes entgegen der Rückstellkraft der Rückverlagerungsfeder weiter über die Stange geschoben werden. Die Stange wird dabei vom Bremselement in Position gehalten. Wird das Löseglied losgelassen, so wird es von einer Feder zurück in die Grundstellung verlagert. Die Rückverlagerungsfeder zieht das mit der Stange verkantete Blockierelement zurück in die Grundstellung, wobei die Stange mitverlagert wird. Wird das Löseglied, also insbesondere der Lösehebel bis in eine Endstellung verlagert, so wird das Bremselement außer Wirkung gebracht. Das Bremselement verlässt dann seine Bremsstellung und nimmt eine Gleitstellung ein, in der sich die Stange frei durch das Gehäuse verschieben lässt. Mit der erfindungsgemäßen Vorrichtung ist somit sowohl eine schrittweise Verlagerung der Stange in Spannrichtung als auch eine schrittweise Verlagerung der Stange in Löserichtung möglich. Dies erfolgt jeweils durch eine Mehrfachbetätigung entweder eines Antriebshebels oder eines Lösehebels. Die erfindungsgemäße Spannzwinge besitzt am Ende der Stange eine Spannbacke, deren Spannfläche in einer Spannfläche einer gehäusefesten Spannbacke gegenüberliegt. Die der Stange zugeordnete Spannbacke kann aber auch eine Spannfläche aufweisen, die von der Spannfläche der gehäusefesten Spannbacke wegweist. In diesem Falle handelt es sich um eine Spreizzwinge.

Ein Ausführungsbeispiel der Erfindung wird nachfolgend anhand beigefügter Zeichnungen erläutert. Es zeigen:
- Figur 1:: Eine erfindungsgemäße Spannzwinge in einer Seitenansicht,
- Figur 2:: vergrößert den Ausschnitt II-II in Figur 1 mit abgenommenen Gehäusedeckel in einer Grundstellung,
- Figur 3:: eine Darstellung gemäß Figur 2, jedoch in einer Lösestellung,
- Figur 4:: eine Folgedarstellung zu Figur 3 nach Zurückschwenken eines Lösehebels von der Lösestellung in die Grundstellung,

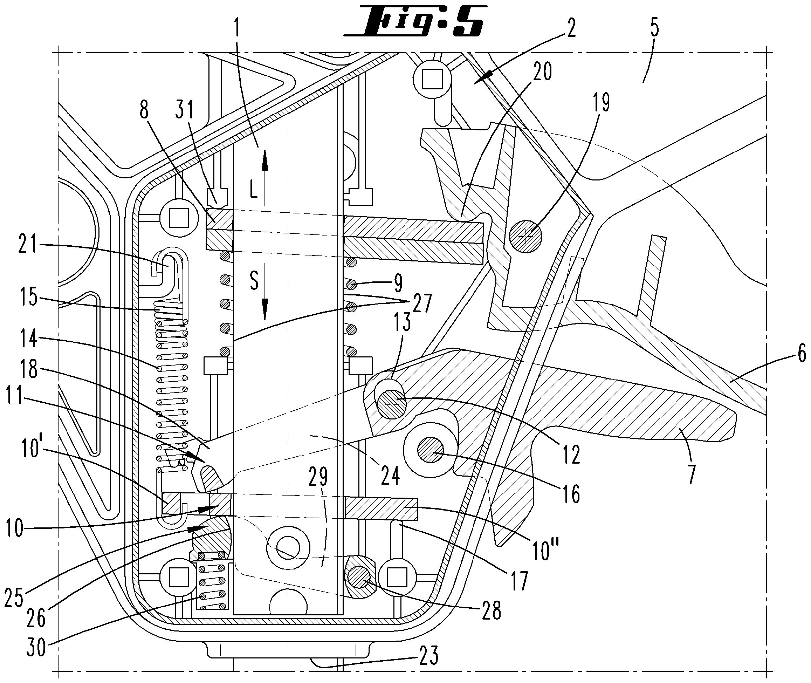

- Figur 5:: eine Folgedarstellung zu Figur 3, nach einer Weiterverlagerung des Lösehebels bis in eine Gleitstellung,
- Figur 6:: ein Schnitt gemäß der Linie VI-VI in Figur 2,
- Figur 7:: den Schnitt gemäß der Linie VII-VII in Figur 5, und

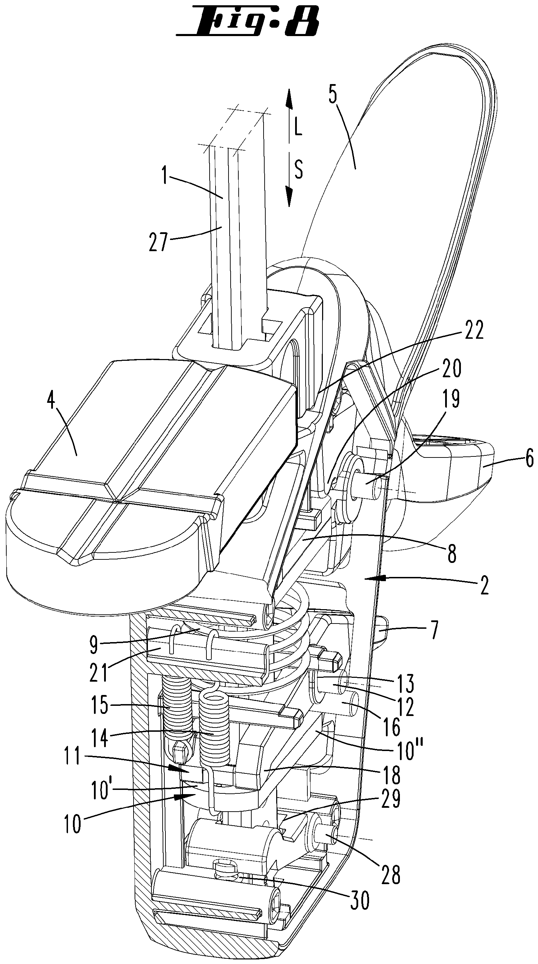

- Figur 8:: eine perspektivische, teilweise aufgebrochene Darstellung des Gehäuses.

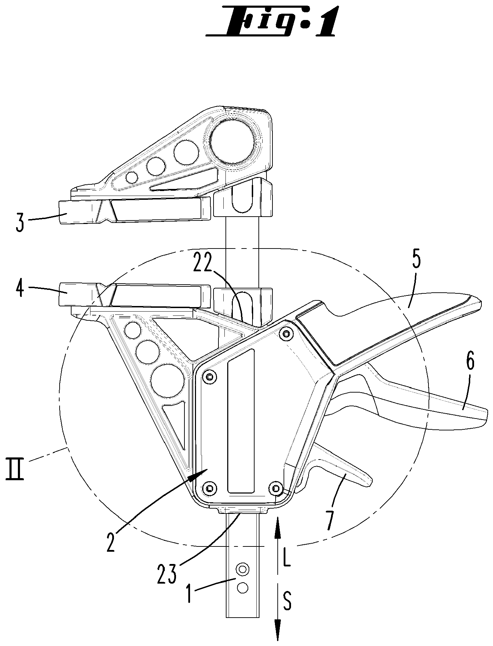

Die Zeichnungen zeigen eine Spannzwinge mit einem Gehäuse 2, welches eine Gehäusekammer aufweist, die durch einen Gehäusedeckel abgedeckt ist, wobei in der Gehäusekammer ein Antriebsgetriebe und eine lösbare Blockiervorrichtung angeordnet ist. Aus dem Gehäuse ragen ein Arm eines Lösehebels 7 und eines Antriebshebels 6. Der Antriebshebel 6 bzw. der Lösehebel 7 sind in Richtung auf einen Handgriff 5 verschwenkbar. Auf der den Hebeln 6, 7 bzw. dem Handgriff 5 gegenüberliegenden Seite trägt das Gehäuse 2 eine feste Spannbacke 4. Das Gehäuse besitzt zwei Gehäuseöffnungen 22, 23, in denen eine Schub- oder Zugstange 1 geführt ist. An den beiden Enden der Stange 1 kann ein eine Spannbacke 3 tragender Kopf befestigt werden. Mit dem Antriebshebel 6 lässt sich die Schiene 1 schrittweise in einer Spannrichtung S verlagern. Mit dem Lösehebel 7 lässt sich die Schiene 1 schrittweise in der zur Spannrichtung S entgegengerichteten Löserichtung L verlagern. In der in Figur 1 dargestellten Betriebsstellung ist der die Spannbacke 3 tragende Kopf derart an der Schiene 1 befestigt, dass die Spannflächen der Spannbacken 3, 4 aufeinander zu weisen. Wird die Schiene 1 in Spannrichtung verlagert, so bewegen sich die beiden Spannbacken 3, 4 aufeinander zu.

In einer nicht dargestellten Betriebsstellung sitzt der die Spannbacke 3 tragende Kopf am anderen Ende der Stange 1, sodass sich die Spannbacken 3, 4 bei einer Verlagerung der Schiene 1 in Spannrichtung S voneinander weg bewegen.

Um die Stange 1, bei der es sich um einen Stahlstreifen mit rechteckigem Querschnitt handelt, in der Spannrichtung S zu verlagern, muss der Antriebshebel 6 in Richtung auf den Handgriff 5 verschwenkt werden. Der Antriebshebel 6 verschwenkt sich dabei um einen Drehzapfen 19, der innerhalb der Gehäusekammer angeordnet ist. Ein Antriebsnocken 20 beaufschlagt dabei ein Ende eines Antriebselementes 8, welches von einer doppelten Stahlplatte ausgebildet ist. Das Antriebselement 8 stützt sich in einer nicht betätigten Stellung an einem Widerlager 31 ab, sodass die Stange 1 im Wesentlichen frei durch ein Fenster des Antriebselementes 8 hindurchgleiten kann. Die Druckfeder 9 bildet eine Rückstellfeder des Antriebselementes 8, die das Antriebselement 8 in der Grundstellung hält. Wird der äußere Arm des zweiarmigen Antriebshebels 6 verschwenkt, so verschwenkt der andere, den Antriebsnocken 20 ausbildende Arm des Antriebshebels 6 in Gegenrichtung und führt zu einer Verkantung des Antriebselementes 8 auf Schiene 1. Bei der Verlagerung des Antriebshebels 6 löst sich das Antriebselement 8 vom Widerlager 31 und wird in Spannrichtung S verlagert, wobei die Stange 1 aufgrund der Verkantung mitgeschleppt wird. Ein Blockierelement 10 bewirkt in seiner Blockierstellung eine Rückverlagerungssperre. Das Blockierelement 10 ist so ausgebildet, dass die Stange 1 in Spannrichtung S gegenüber dem Blockierelement 10 verlagert werden kann. Wird der Antriebshebel 6 losgelassen, so verlagert die Rückstellfeder 9 das Antriebselement 8 wieder in die Grundstellung.

Durch mehrmaliges derartiges Betätigen des Antriebshebels 6 können die beiden Spannbacken 3, 4 schrittweise verlagert und bis in eine Spannstellung gebracht werden.

Um die Spannzwinge aus der Spannstellung in eine Lösestellung zu bringen, muss der aus dem Gehäuse 2 herausragende Arm des Lösehebels 7 in Richtung auf den Handgriff 5 verschwenkt werden. Der Lösehebel 7 besitzt ein Lagerauge 13, mit dem der Lösehebel 7 an einen am Gehäuse 2 festen Lagerzapfen 12 verschwenkbar gelagert ist. Ein in das Gehäuse hineinragender Arm 11 des Lösehebels 7 besitzt ein Hebelende 18, welches gegen ein Blockierelement 10 wirken kann.

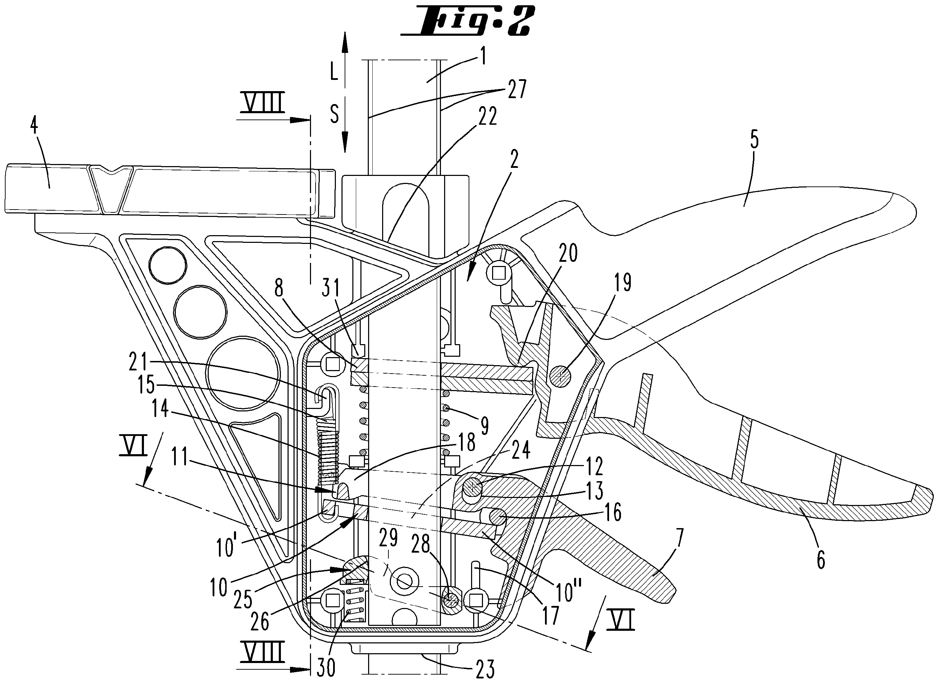

In der Blockierstellung, die der in Figur 2 dargestellten Grundstellung des Lösehebels 7 entspricht, stützt sich ein Ende 10" des Blockierelementes 10 an einem Anschlag 16 des Gehäuses 2 ab. Das gegenüberliegende Ende 10', welches auch vom Hebelende 18 beaufschlagbar ist, wird mittels einer daran angreifenden Rückverlagerungsfeder 14 in Löserichtung L beaufschlagt. Die Rückverlagerungsfeder 14 ist mit ihrem anderen Ende an einer Befestigungsstelle 21 des Gehäuses befestigt.

Das Blockierelement 10 besitzt ein Fenster 24, welches scharfe Fensterkanten aufweist. Durch das Fenster 24 ist die Stange 1 geführt. Die Rückverlagerungsfeder 14 hält das Blockierelement 10 in einer Verkantstellung, in der die Kanten des Fensterrandes an den Schmalseiten 27 der Stange 1 derart angreifen, dass sich die Stange 1 nicht in Löserichtung L, wohl aber in Spannrichtung S gegenüber dem Blockierelement 10 verlagern lässt.

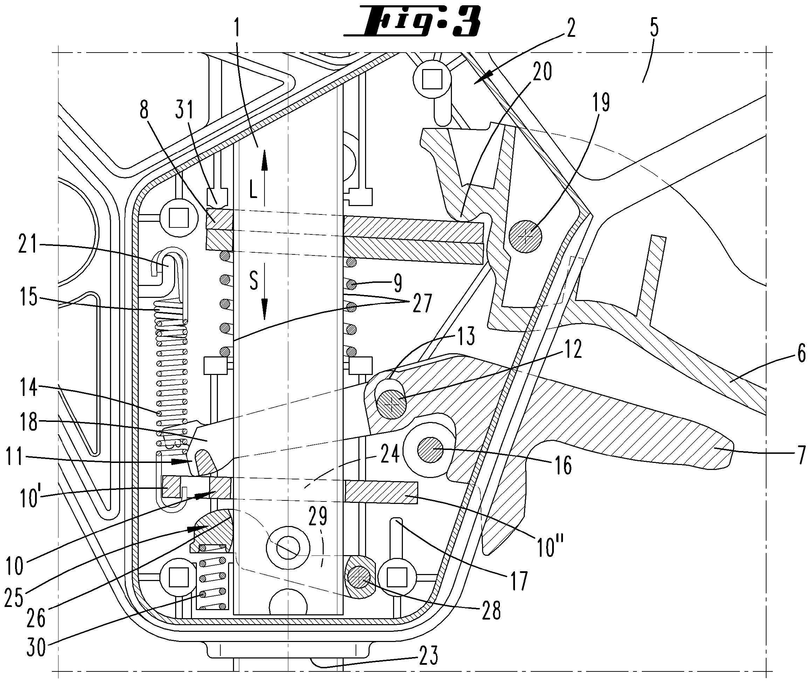

Wird der Lösehebel 7 in die in Figur 3 dargestellte Lösestellung verschwenkt, was durch Angriff des Hebelendes 18 im Bereich des Endes 10' des Blockierelementes, also im Bereich der Angriffsstelle der Rückverlagerungsfeder 14 erfolgt, löst sich das andere Ende 10" vom Anschlag 16. Dabei geraten die Kanten des Fensters 24 aus der Beaufschlagungsstellung, sodass sich die Stange 1 nicht nur in Spannrichtung S, sondern auch in Löserichtung L gegenüber dem Blockierelement 10 verlagern lässt.

Um zu vermeiden, dass in dieser Lösestellung die Stange 1 sich leichtgängig gegenüber dem Gehäuse 2 verlagern lässt, ist innerhalb der Gehäusekammer des Gehäuses 2 ein Bremselement 25 angeordnet. Das Bremselement 25 ist um eine Schwenkachse 28 schwenkbar im Gehäuse gelagert. Hierzu ragen vom Bremselement 25 Achsstummel 28 ab, die in sich gegenüberliegende Öffnungen der Gehäusewände eingreifen.

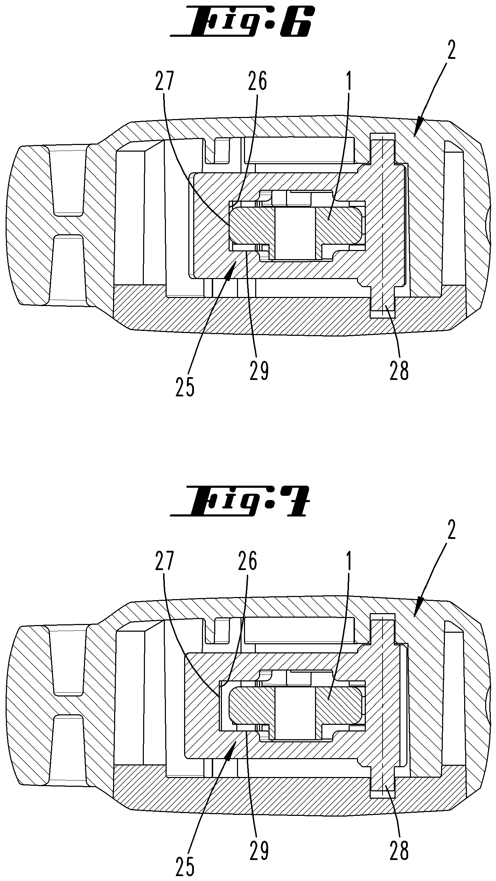

Das als Bremshebel ausgebildete Bremselement 25 besitzt ein rechteckiges Fenster 29, durch welches die Stange 1 ragt. Eine Fensterschmalwand bildet eine Bremsflanke 26 aus, die eine gerundete Oberfläche aufweisen kann. In der in den Figuren 2 bzw. 6 dargestellten Bremsstellung wird die Bremsflanke 26 von der Kraft der Feder 30 gegen einen Oberflächenabschnitt 27 der Stange 1 gedrückt. Bei dem Oberflächenabschnitt 27 handelt es sich um die Schmalseite der Stange 1. Die Feder 30 ist eine Druckfeder und liegt in einer Federaufnahmekammer. Ihre Wirkrichtung verläuft parallel zur Verlagerungsrichtung der Stange 1. Die Feder 30 stützt sich mit ihrem einen Ende auf den Boden ihrer Aufnahmekammer ab. Das andere Ende der Feder 30 wirkt gegen das freie Ende des Bremshebels 25. Die Feder erzeugt somit eine Kraft, die zur Folge der Anlenkung 28 in eine Normalkraft gewandelt wird, die die Bremsflanke 26 gegen den Oberflächenabschnitt 27 der Stange presst. Dabei wird eine Reibkraft erzeugt. Diese Kraft entspricht einer Bremskraft, die überwunden werden muss, um die Stange 1 in der Bremsstellung des Bremselementes 25 entweder in Spannrichtung S oder in Löserichtung L zu verlagern.

Wird ausgehend von der in Figur 3 dargestellten Lösestellung der Lösehebel 7 losgelassen, so wird er von einer ihm zugeordneten Rückstellfeder 15, die ebenfalls an der Befestigungsstelle 21 angreift, in die Grundstellung zurückgezogen. Dabei löst sich das Hebelende 18 vom Ende 10' des Blockierelementes 10. Die Rückverlagerungsfeder 14 entwickelt eine Rückstellkraft auf das Blockierelement 10, die größer ist als die vom Bremselement 25 verursachte Bremskraft. Dies hat zur Folge, dass die Rückverlagerung des Blockierelementes 10 zur Folge seiner Verkantung auf der Stange 1 die Stange 1 in Löserichtung L mitschleppt.

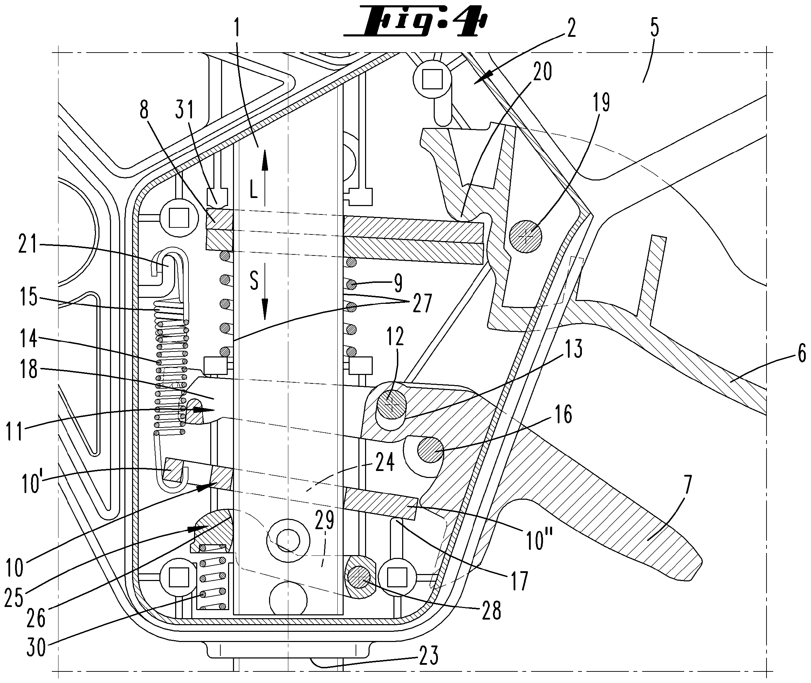

Die Figur 4 zeigt eine Zwischenstellung, in der sich das Blockierelement 10 auf der Stange 1 verkantet hat, die sich aber noch nicht bewegt hat. Der Lösehebel 7 hat sich vom Blockierelement 10 gelöst, sodass am Blockierelement nur die Feder 14 angreift, um das Blockierelement 10 in Löserichtung L zu verlagern. Die Verlagerung erfolgt zusammen mit der Stange 1.

Wird der Lösehebel 7 ausgehend von der in Figur 3 dargestellten Lösestellung weiterverschwenkt, so verlagert er das Blockierelement 10 weiter in Richtung auf das Bremselement 25, da das Blockierelement 10 zwischen Lösehebel 7 und Bremselement 25 angeordnet ist.

In der Endphase des Verschwenkens des Lösehebels 7 wird das freie Ende des Bremselementes 25 vom Blockierelement 10 beaufschlagt. Dies entspricht einer Beaufschlagung des Bremselementes 25 durch den Lösehebel 7 unter Zwischenlage des Blockierelementes 10. Diese Relativverlagerung führt zu einem Verschwenken des Bremselementes 25 um seine Schwenkachse 28, wobei die Feder 30 gespannt wird. Einhergehend mit dieser Schwenkverlagerung des Bremselementes 25 löst sich die Bremsflanke 26 vom Oberflächenabschnitt 27 der Stange 1, sodass das Bremselement seine Gleitstellung einnimmt. In dieser Gleitstellung fällt die zur Verlagerung der Stange 1 zu überwindende Bremskraft weg. Da sich zudem das Blockierelement 10 an einem Anschlag 17 derart abstützt, dass die Stange 1 frei durch das Fenster 24 gleiten kann, kann sich die Stange 1 in dieser Gleitstellung lediglich durch Angriff der Schwerkraft verlagern. Sie ist leichtgängig in den Fenstern 29 und 24 geführt.

Wird der Lösehebel 7 wieder losgelassen, so verlagert die Feder 30 das Bremselement 25 von der Gleitstellung zurück in die Bremsstellung, in der die Bremsflanke 26 bewegungshemmend an der Stange 1 angreift. Das Blockierelement 10 löst sich mit seinem Ende 10" vom Anschlag 17 und erreicht eine Verkantstellung (Figur 4), in der es bei seiner Rückverlagerung in die Grundstellung in der oben beschriebenen Weise die Stange 1 in Löserichtung L mitschleppt.

Die Flanke, an der das Bremselement 25 vom Blockierelement 10 beaufschlagt, besitzt eine Rundung. Rückwärtig dieser Rundung stützt sich die Feder 30 ab. Die Rückverlagerungsfeder 14 und die Rückstellfeder 15 sind jeweils als Zugfedern ausgebildet.

Die vorstehenden Ausführungen dienen der Erläuterung der von der Anmeldung insgesamt erfassten Erfindungen, die den Stand der Technik zumindest durch die folgenden Merkmalskombinationen jeweils eigenständig weiterbilden, nämlich:
Eine lösbare Blockiervorrichtung gekennzeichnet durch ein Bremselement, das in einer Bremsstellung derart auf die Stange einwirkt, dass die Stange nur nach Überwindung einer gegen die Verlagerungsrichtung der Stange wirkenden Bremskraft verlagerbar ist, welche Bremskraft in einer Gleitstellung des Bremselementes nicht überwunden werden muss.

Eine lösbare Blockiervorrichtung, die dadurch gekennzeichnet ist, dass das Bremselement durch eine über die Lösestellung hinausgehende Verlagerung des Lösegliedes von der Bremsstellung in die Gleitstellung bringbar ist.

Eine lösbare Blockiervorrichtung, die dadurch gekennzeichnet ist, dass das Bremselement eine Bremsflanke aufweist, die in der Bremsstellung kraftbeaufschlagt an einem Oberflächenabschnitt der Stange anliegt und in der Gleitstellung vom Oberflächenabschnitt beabstandet ist.

Eine lösbare Blockiervorrichtung, die dadurch gekennzeichnet ist, dass das Bremselement (25) einen Bremshebel aufweist
Eine lösbare Blockiervorrichtung, die dadurch gekennzeichnet ist, dass das Bremselement durch Schwenken eines Armes des einen Lösehebel aufweisenden Lösegliedes in seine Gleitstellung bringbar ist.

Eine lösbare Blockiervorrichtung, die dadurch gekennzeichnet ist, dass das Bremselement um eine an einem das Löseglied und das Bremselement lagernden Gehäuse befestigten Schwenkachse schwenkbar ist.

Eine lösbare Blockiervorrichtung, die dadurch gekennzeichnet ist, dass das Bremselement ein Fenster aufweist, durch das die Stange geführt ist, wobei ein Abschnitt der Laibung des Fensters die Bremsflanke ausbildet, die insbesondere reibschlüssig mit der Stange zusammenwirkt.

Eine lösbare Blockiervorrichtung, die dadurch gekennzeichnet ist, dass das Bremselement von einer in Verlagerungsrichtung der Stange wirkenden Feder beaufschlagt ist.

Eine lösbare Blockiervorrichtung, die dadurch gekennzeichnet ist, dass das Blockierelement eine Stahlplatte mit einem Fenster ist, durch das die Stange geführt ist, welches Fenster Kanten aufweist, die in der Blockierstellung als Folge einer Verkantung der Stahlplatte mit der Stange bei Ausüben einer Kraft in Löserichtung auf die Stange mit der Oberfläche der Stange zusammenwirkt.

Eine Spannzwinge, die dadurch gekennzeichnet ist, dass die Stange vermittels einer mehrmalig hintereinander erfolgenden Verlagerung des Lösegliedes über die Lösestellung hinaus schrittweise in Löserichtung verlagerbar ist
Eine lösbare Blockiervorrichtung, die dadurch gekennzeichnet ist, dass das Blockierelement von einer Rückverlagerungsfeder in Löserichtung beaufschlagt wird
Eine lösbare Blockiervorrichtung, die dadurch gekennzeichnet ist, dass das Blockierelement in der Freigabestellung gegen einen Anschlag tritt.

Eine Spannzwinge, die dadurch gekennzeichnet ist, dass das Gehäuse eine lösbare Blockiervorrichtung insbesondere nach einem oder mehreren der vorhergehenden Ansprüche aufweist.

### Bezugszeichenliste:

| | | | |
|---|---|---|---|
| 1 | Stange | 21 | Befestigungsstelle |
| 2 | Gehäuse | 22 | Führungsöffnung |
| 3 | Spannbacke | 23 | Führungsöffnung |
| 4 | Spannbacke | 24 | Fenster |
| 5 | Handgriff | 25 | Bremselement |
| 6 | Antriebshebel | 26 | Bremsflanke |
| 7 | Lösehebel | 27 | Oberflächenabschnitt |
| 8 | Antriebselement | 28 | Schwenkachse |
| 9 | Rückstellfeder | 29 | Fenster |
| 10 | Blockierelement | 30 | Feder |
| 11 | Hebelarm | 31 | Widerlager |
| 12 | Lagerzapfen | | |
| 13 | Lagerauge | | |
| 14 | Rückverlagerungsfeder | L | Löserichtung |
| 15 | Rückstellfeder | S | Spannrichtung |
| 16 | Anschlag | | |
| 17 | Anschlag | | |
| 18 | Hebelende | | |
| 19 | Drehzapfen | | |
| 20 | Antriebsnocken | | |

## Patentansprüche

1. Lösbare Blockiervorrichtung insbesondere an einem Spannwerkzeug bspw. an einer Spannzwinge mit einem Blockierelement (10) das in einer Blockierstellung die Verlagerbarkeit einer Stange (1) zumindest in einer Löserichtung (L) blockiert, und einem Löseglied (7), das bei seiner Verlagerung von einer Grundstellung in eine Lösestellung das Blockierelement (10) in eine Freigabestellung verlagert, in der die Stange (1) zumindest in Löserichtung verlagerbar ist, **gekennzeichnet durch** ein Bremselement (25), das in einer Bremsstellung derart auf die Stange (1) einwirkt, dass die Stange (1) nur nach Überwindung einer gegen die Verlagerungsrichtung der Stange (1) wirkenden Bremskraft verlagerbar ist, welche Bremskraft in einer Gleitstellung des Bremselementes (25) nicht überwunden werden muss.

2. Lösbare Blockiervorrichtung nach Anspruch 1, **dadurch gekennzeichnet, dass** das Bremselement (25) durch eine über die Lösestellung hinausgehende Verlagerung des Lösegliedes (7) von der Bremsstellung in die Gleitstellung bringbar ist.

3. Lösbare Blockiervorrichtung nach einem der vorhergehenden Ansprüche, **dadurch gekennzeichnet, dass** das Bremselement (25) eine Bremsflanke (26) aufweist, die in der Bremsstellung kraftbeaufschlagt an einem Oberflächenabschnitt (27) der Stange (1) anliegt und in der Gleitstellung vom Oberflächenabschnitt (27) beabstandet ist.

4. Lösbare Blockiervorrichtung nach einem der vorhergehenden Ansprüche, **dadurch gekennzeichnet, dass** das Bremselement (25) einen Bremshebel aufweist.

5. Lösbare Blockiervorrichtung nach einem der vorhergehenden Ansprüche, **dadurch gekennzeichnet, dass** das Bremselement durch Schwenken eines Armes (11) des einen Lösehebel aufweisenden Lösegliedes (7) in seine Gleitstellung bringbar ist.

6. Lösbare Blockiervorrichtung nach einem der vorhergehenden Ansprüche, **dadurch gekennzeichnet, dass** das Bremselement (25) um eine an einem das Löseglied (7) und das Bremselement (25) lagernden Gehäuse (2) befestigten Schwenkachse (28) schwenkbar ist.

7. Lösbare Blockiervorrichtung nach einem der Ansprüche 3 bis 6, **dadurch gekennzeichnet, dass** das Bremselement (25) ein Fenster (29) aufweist, durch das die Stange (1) geführt ist, wobei ein Abschnitt der Laibung des Fensters (29) die Bremsflanke (26) ausbildet, die insbesondere reibschlüssig mit der Stange (1) zusammenwirkt.

8. Lösbare Blockiervorrichtung nach einem der vorhergehenden Ansprüche, **dadurch gekennzeichnet, dass** das Bremselement (25) von einer in Verlagerungsrichtung der Stange (1) wirkenden Feder (30) beaufschlagt ist.

9. Lösbare Blockiervorrichtung nach einem der vorhergehenden Ansprüche, **dadurch gekennzeichnet, dass** das Blockierelement (10) eine Stahlplatte mit einem Fenster (24) ist, durch das die Stange (1) geführt ist, welches Fenster Kanten aufweist, die in der Blockierstellung als Folge einer Verkantung der Stahlplatte mit der Stange (1) bei Ausüben einer Kraft in Löserichtung (L) auf die Stange (1) mit der Oberfläche (27) der Stange (1) zusammenwirken.

10. Lösbare Blockiervorrichtung nach einem der vorhergehenden Ansprüche, **dadurch gekennzeichnet, dass** die Stange (1) vermittels einer mehrmalig hintereinander erfolgenden Verlagerung des Lösegliedes (7) über die Lösestellung hinaus schrittweise in Löserichtung (L) verlagerbar ist.

11. Lösbare Blockiervorrichtung nach einem der vorhergehenden Ansprüche, **dadurch gekennzeichnet, dass** das Blockierelement (10) von einer Rückverlagerungsfeder (14) in Löserichtung (L) beaufschlagt wird.

12. Lösbare Blockiervorrichtung nach einem der vorhergehenden Ansprüche, **dadurch gekennzeichnet, dass** das Blockierelement (10) in der Freigabestellung gegen einen Anschlag (17) tritt.

13. Spannzwinge mit einer eine erste Spannbacke (3) tragenden Stange (1) und einem eine zweite Spannbacke (4) tragenden Gehäuse (2), welches ein Antriebsglied (6) aufweist, durch dessen Betätigung die Stange (1) in einer einer Löserichtung (L) entgegengerichteten Spannrichtung (S) verlagerbar ist, **dadurch gekennzeichnet, dass** das Gehäuse eine lösbare Blockiervorrichtung nach einem der vorhergehenden Ansprüche aufweist.

## Claims

1. Detachable blocking device, in particular on a clamping tool, for example on a clamp, comprising a blocking element (10), which blocks the displacement capability of a rod (1) in at least one detachment direction (L) in a blocking position, and a detachment member (7), which displaces the blocking element (10) into a release position when moved from a default position into a detachment position, in which release position the rod (1) can be displaced at least in the detachment direction, **characterized by** a brake element (25) which in a braking position acts on the rod (1) in such a way that the rod (1) can only be displaced after neutralization of a braking force acting against the displacement direction of the rod (1), which braking force does not have to be neutralized in a sliding position of the brake element (25).

2. Detachable blocking device according to claim 1, **characterized in that** the brake element (25) can be brought from the braking position into the sliding position by a displacement of the detachment member (7) beyond the detachment position.

3. Detachable blocking device according to one of the preceding claims, which is **characterized in that** the brake element (25) has a brake flank (26) which in the braking position is subjected to force and bears against a surface portion (27) of the rod (1), and in the sliding position is spaced apart from the surface portion (27).

4. Detachable blocking device according to one of the preceding claims, **characterized in that** the brake element (25) has a brake lever.

5. Detachable blocking device according to one of the preceding claims, **characterized in that** the brake element can be brought into its sliding position by pivoting of an arm (11) of the detachment member (7) having a detachment lever.

6. Detachable blocking device according to one of the preceding claims, **characterized in that** the brake element (25) is pivotable about a pivot axis (28) fastened to a housing (2) accommodating the detachment member (7) and the brake element (25).

7. Detachable blocking device according to one of the claims 3 to 6, **characterized in that** the brake element (25) has a window (29) through which the rod (1) is guided, wherein a portion of the jamb of the window (29) forms the brake flank (26) which in particular cooperates frictionally with the rod (1).

8. Detachable blocking device according to one of the preceding claims, **characterized in that** the brake element (25) is acted on by a spring (30) acting in the displacement direction of the rod (1).

9. Detachable blocking device according to one of the preceding claims, **characterized in that** the blocking element (10) is a steel plate with a window (24) through which the rod (1) is guided, which window has edges which in the blocking position, due to a tilting of the steel plate with the rod (1), co-operates with the surface (27) of the rod (1) when a force is exerted on the rod in the detachment direction (L).

10. Detachable blocking device according to one of the preceding claims, **characterized in that** the rod (1) can be displaced progressively in the detachment direction by means of a displacement, occurring several times one after the other, of the detachment member (7) beyond the detachment position (L).

11. Detachable blocking device according to one of the preceding claims, **characterized in that** the blocking element (10) is acted on by a return displacement spring (14) in the detachment direction (L).

12. Detachable blocking device according to one of the preceding claims, **characterized in that** the blocking element (10) strikes against a stop (17) in the release position.

13. Clamp comprising a rod (1) bearing a first clamping jaw (3) and a housing (2) bearing a second clamping jaw (4), said housing having a drive member (6) which, when actuated several times one after the other, displaces the rod (1) in a clamping direction (S) which is opposed to the detachment direction (L), **characterized in that** the housing has a detachable blocking device according to one of the preceding claims.

## Revendications

1. Dispositif de blocage déverrouillable en particulier sur un outil de serrage, par exemple un serre-joint, comprenant un élément de blocage (10) qui bloque la possibilité de déplacer une tige (1) au moins dans une direction de desserrage (L) et un élément de déverrouillage (7) qui, lors de son déplacement d'une position de base dans une position de déverrouillage, déplace l'élément de blocage (10) dans une position de déblocage dans laquelle la tige (1) est susceptible d'être déplacée au moins dans la direction de desserrage, **caractérisé par** un élément de freinage (25) qui, dans une position de freinage, agit sur la tige (1) de manière à ce que la tige (1) soit susceptible d'être déplacée uniquement en surmontant un effort de freinage s'opposant à la direction de déplacement de la tige (1) lequel effort de freinage n'a pas à être surmonté dans une position de glissement de l'élément de freinage (25).

2. Dispositif de blocage déverrouillable selon la revendication 1, **caractérisé en ce que** l'élément de freinage (25) peut être amené de la position de freinage dans la position de glissement par déplacement de l'élément de déverrouillage (7) au-delà de la position de déverrouillage.

3. Dispositif de blocage déverrouillable selon l'une des revendications précédentes, **caractérisé en ce que** l'élément de freinage (25) présente un flanc de freinage (26) qui, dans la position de freinage, appuie sous effort contre une portion de surface extérieure (27) de la tige (1) et qui, dans la position de glissement, est à distance de la portion de surface extérieure (27).

4. Dispositif de blocage déverrouillable selon l'une des revendications précédentes, **caractérisé en ce que** l'élément de freinage (25) comporte un levier de freinage.

5. Dispositif de blocage déverrouillable selon l'une des revendications précédentes, **caractérisé en ce que** l'élément de freinage est susceptible d'être amené dans sa position de glissement par pivotement d'un bras (11) de l'élément de déverrouillage (7) qui comporte un levier de déverrouillage.

6. Dispositif de blocage déverrouillable selon l'une des revendications précédentes, **caractérisé en ce que** l'élément de freinage (25) peut pivoter autour d'un axe de pivotement (28) fixé à un boîtier (2) qui supporte l'élément de déverrouillage (7) et l'élément de freinage (25).

7. Dispositif de blocage déverrouillable selon l'une des revendications 3 à 6, **caractérisé en ce que** l'élément de freinage (25) présente une fenêtre (29) à travers laquelle est guidée la tige (1), dans lequel une portion de l'intrados de la fenêtre (29) forme le flanc de freinage (29) qui, en particulier, coopère par friction avec la tige (1).

8. Dispositif de blocage déverrouillable selon l'une des revendications précédentes, **caractérisé en ce que** l'élément de freinage (25) est sollicité par un ressort (30) agissant dans la direction de déplacement de la tige (1).

9. Dispositif de blocage déverrouillable selon l'une des revendications précédentes, **caractérisé en ce que** l'élément de blocage (10) est une plaque en acier ayant une fenêtre (24) à travers laquelle est guidée la tige (1), laquelle fenêtre présente des bords coopérant, dans la position de blocage, avec la surface extérieure (27) de la tige (1) en suite d'un positionnement en biais de la plaque en acier avec la tige (1) lorsqu'un effort est appliqué sur la tige (1) dans la direction de desserrage (L).

10. Dispositif de blocage déverrouillable selon l'une des revendications précédentes, **caractérisé en ce que** la tige (1) est apte à être déplacée pas à pas dans la direction de desserrage (L) par déplacement successif de l'élément de déverrouillage au-delà de la position de déverrouillage.

11. Dispositif de blocage déverrouillable selon l'une des revendications précédentes, **caractérisé en ce que** l'élément de blocage (10) est sollicité par un ressort de rappel (14) dans la direction de desserrage (L).

12. Dispositif de blocage déverrouillable selon l'une des revendications précédentes, **caractérisé en ce que** l'élément de blocage (10) dans la position de déblocage vient en appui contre une butée (17).

13. Serre-joint, comprenant une tige (1) supportant une première mâchoire de serrage (3) et un boîtier (2) supportant une deuxième mâchoire de serrage (4), lequel boîtier (2) comporte un élément d'actionnement (6) dont l'actionnement permet de déplacer la tige (1) dans une direction de serrage opposée à une direction de desserrage (L), **caractérisé en ce que** le boîtier comporte un dispositif de blocage déverrouillable selon l'une des revendications précédentes.
